# EUROPEAN PATENT SPECIFICATION

(11) **EP 2 418 067 B1**
(45) Date of publication and mention of the grant of the patent: **07.03.2018**
(21) Application number: 11176571.5
(22) Date of filing: 04.08.2011
(51) Int. Cl.: B29C 45/26

(54) **Demolding device and injection molding machine**
Entformungsvorrichtung und Spritzgießmaschine
Dispositif de démoulage et machine de moulage par injection

(30) Priority: 09.08.2010 JP 2010178480
(43) Date of publication of application: 15.02.2012
(73) Proprietor: The Japan Steel Works, Ltd., Tokyo 141-0032 (JP)
(72) Inventor: Matsuzaki, Koji, Hiroshima-City, Hiroshima (JP)
(74) Representative: Grünecker Patent- und Rechtsanwälte PartG mbB

(56) References cited:
- EP-A1- 0 487 734
- US-A- 2 363 808
- US-A- 2 457 336
- SORS L: "SPRITZGIESWERKZEUG MIT AUSSCHRAUBGETRIEBE", KUNSTOFFE INTERNATIONAL, CARL HANSER VERLAG, MUNCHEN, DE, vol. 69, no. 4, 1 April 1979 (1979-04-01), page 206/207, XP001176302, ISSN: 0023-5563

## Description

### BACKGROUND OF THE INVENTION

### 1. Field of the Invention

The invention relates to a demolding device for demolding a molded product by means of rotational operation of a rotatable mold element, i.e., a moving part, such as a core incorporated in a mold, and also relates to an injection molding machine having the demolding device. More specifically, the invention relates to, without limitation, a demolding device and an injection molding machine, which are suitable for forming a product having a threaded portion.

### 2. Description of the Related Art

A generic demolding device as defined in the preamble of claim 1 is for instance known from EP 0 487 734 A1.

EP 0 487 734 A1 discloses a demolding device as e.g. shown in Fig. 1 and Fig. 2. Between a fixed mold, a movable mold and two rotatable cores, a cavity is generated, in which a molded product can be formed. The rotatable cores are provided on an end extending into the cavities with threaded portions to form an mirror threaded portion on the molded product. For demolding of the threaded portions, the two rotatable cores are provided on one of their backsides with gears, interdigitating with a central gear which is provided on a central shaft mounted in a cavity formed in an inner region of the movable mold. The movable mold comprises two parts: a movable mold body and a mold mounting section. These parts are attached to each other by screws. On a backside of the movable mold, there is provided a hole through which the central shaft extends and interdigitates with a further shaft which extends through a hole from an attachment surface of a movable platen. The further shaft is connected to a server motor.

A molded product formed by a injection molding may be obtained by forming a cavity in a mold with a pair of molds clamped, injecting a molten material into the cavity, and opening the mold once the mold becomes cool sufficient for the material to solidify. Such finished molded products, for example, are ejected from the mold by ejector pins, which are operable by a known ejector. However, some molded products could not be obtained only by such an ejector owing to shape of the products. Examples of these molded products include a product having a threaded portion. For example, a mold for forming a female threaded portion requires a core for shaping the female threaded portion, i.e., a core having a corresponding male threaded portion. Therefore, in order to obtain the molded product after an injection molding process, the core needs to be rotated to be removed from the female threaded portion.

JP-A-9-29791 describes a mold for forming a molded product having a threaded portion, in which the mold has a certain threading device. The threading device described in JP-A-9-29791 includes a core for forming a threaded portion and an actuator for rotating the core. The actuator includes a motor and a plurality of gears for transmission of a rotation of the motor. Therefore, a molten resin is injected to mold to be filled up with the mold clamped, the mold is then opened after the mold has been cooled down and solidified, the actuator then operates the core to rotate so that the core is demolded from the threaded portion of a molded product, and thus the molded product can be taken from the mold. In the mold described in JP-A-9-29791, the threading device is installed in a movable mold, thereby preventing a fixed mold from becoming bigger. Therefore, a runner, which is formed in a fixed mold, may be designed to become shorter so that waste of the molten resin can be reduced.

JP-A-2005-329662 also describes a mold having a threading device. The mold described in JP-A-2005-329662 has a plurality of rotatable cores installed so as to form a plurality of molded products, each having a threaded portion, at the same time. The threading device described in JP-A-2005-329662 includes a plurality of cores and an actuator for rotating the cores. The actuator includes pinions integrally secured to cores, respectively, racks installed to engage the pinions, a ball nut device for operating the racks, and a motor for operating the ball nut device. Therefore, operation of the motor allows rotations of all cores at the same time.

The threading devices disclosed in JP-A-9-29791 and JP-A-2005-329662 may manage to demold a molded product having a threaded portion from a mold. The mold disclosed in JP-A-9-29791 may have a shorter runner by making a fixed mold smaller because the threading device is installed on a movable mold. It may be advantageous that the mold described in JP-A-2005-329662 may form a plurality of molded products having threaded portions at the same time by installing a plurality of cores. However, there exist problems in the devices of JP-A-9-29791 and JP-A-2005-329662. For example, since these molds need to install an entire threading device including an actuator, the molds are expensive because elements such as a motor are required to be installed on the mold whenever the mold is prepared. Furthermore, attachment or installation of a mold is a delicate job because the mold is required to be installed so that a motor installed to the mold must not interfere with elements, such as a tie bar, in an injection molding machine. While the structure of a mold is already complicated with hot water and cold water pipes for adjusting temperature, the threading device makes its structure more complex when it is installed in the mold. Moreover, when a robot arm is used to demold a molded product, components such as a motor also cause a problem by interfering the movement of the robot arm. Further, since the threading device is installed on the mold, a power supply line, a control line, etc, connected to the threading device interfere with the mold.

A problem exists in an association between an injection molding machine and the threading device. A control circuit installed on a general-purpose injection molding machine has a function of transmitting a signal outwards in a predetermined cycle. If the signal is transmitted to the threading device, it may associate the molding cycle to the operation of the threading device. In other words, the threading device may be operated by the control circuit of the injection molding machine when signals for rotating or stopping the motor is transmitted with respect to the threading device. However, since the signals that are already embedded in a control circuit are general-purpose, it is impossible to control the threading device by a delicate transmission of signals. For example, it is impossible to vary a rotational speed, or to adjust a rotational angle. The threading device is also limited to receive simple signals. Thus, this causes loss in the association between the injection molding machine and the threading device, thereby causing loss in time for the entire cycle. Accordingly, a molded product may not be formed efficiently, which increases the cost of molding. An initial adjustment also takes longer for adjusting the timing of a threading operation and a molding cycle of the injection molding machine.

A further demolding device is known from SORS L: Spritzgiesswerkzeug mit Ausschraubgetriebe", Kunststoffe International, Carl Hanser Verlag, München, DE, vol. 69, no. 4, 1 April 1979, (1979-04-01), page 206/207, XP001176302, ISSN: 0023-5563.

### SUMMARY OF THE INVENTION

An object of the invention is to provide a demolding device and an injection molding machine incorporating the demolding device in order to resolve the aforementioned problems. Specifically, the invention provides a demolding device and an injection molding machine having the demolding device, wherein the demolding device may demold a molded product, which may be removed by a rotation of components of a cavity; a mold is simple and cost-effective; the demolding device may be easily attached or installed on a platen device; the demolding device does not interfere with devices, such as a robot arm, for removing a molded product; the threading device may efficiently associate a molding cycle with movements of components of a cavity; and accordingly a molded product may be formed efficiently and with lower costs.

To achieve the above-described object, the invention installs a demolding device having an actuator on a movable platen of a platen device. A movable mold, in which a molded product is demolded by an operation of a rotatable mold component configuring a cavity, is designed to be attached to an attachment surface of the demolding device. The demolding device includes a motor and a rotatable body, and the rotatable body may rotate through a certain transmission mechanism by the motor. The rotatable body is accommodated in an opening formed on the attachment of the demolding device and is adapted to transmit a rotational force by the engagement with a certain rotatable member of a movable mold.

According to the invention, there is provided a demolding device with the features defined in claim 1.

Preferred embodiments are defined in the dependent claims.

According to a first aspect of the invention, there is provided a demolding device for demolding a molded product formed by a mold, wherein the mold comprises a fixed mold of a fixed platen, a movable mold of a movable platen and a rotatable mold element and is configured to form the molded product by using a cavity defined by the fixed mold, the movable mold and the rotatable mold element, the demolding device comprising: a motor; and a rotatable body rotatable by the motor through a rotation transmission mechanism, wherein the demolding device is installed on a side of the movable platen of the mold, wherein the rotatable body is accommodated in an opening that is provided on an attachment surface to which the movable mold is attachable, and wherein the rotatable body is adapted to transmit a rotation to the rotatable mold element, which is installed on a side of the movable mold, for rotating the rotatable mold element so as to demold the molded product formed by the cavity.

According to a second aspect of the invention, in the demolding device, wherein the motor is installed on a lateral side of the rotation transmission mechanism, wherein the rotation transmission mechanism comprises a rotatable shaft and an engaging pair of a first bevel gear and a second bevel gear, wherein one end of the rotatable shaft is connected to an output axis of the motor, wherein the second bevel gear is installed to another end of the rotatable shaft, and wherein the first bevel gear is installed to the rotatable body.

According to a third aspect of the invention, in the demolding device, wherein the rotatable body is provided to substantially a center portion of the attachment surface, and wherein the rotatable body has a through-hole in an axial direction, through which an ejector pin of an ejector device is inserted.

According to a further aspect of the invention, there is provided an injection molding machine with the features defined in claim 6.
The rotatable body may transmit rotation to the rotatable mold component installed on a side of the movable mold and allow the rotatable mold component to rotate. That is, there is no need to install an actuator, such as a motor, on a mold. Therefore, this configuration may simplify the structure of a mold, allows manufacturing a mold at a low cost, and does not interfere with pipe lines for adjustment of temperature installed in a mold. Moreover, since an actuator is not installed in a mold, there is no obstacle of bothering a movement of a robot arm or the like when a molded product is removed from an opened mold by the robot arm. Furthermore, the demolding device is installed on a movable platen. In other words, the demolding device is one of the devices configuring an injection molding machine. Therefore, the demolding device may be easily associated with other devices in the injection molding machine, and may form a molded product efficiently and at lower cost by facilitating an efficient association between a molding cycle and a threading operation.

According to another aspect on the invention, a motor is installed on a side of a rotation transmission mechanism. The rotation transmission mechanism includes a rotatable shaft and an engaging pair of first and second bevel gears. One end of the rotatable shaft is connected to an output axis of the motor, the second bevel gear is attached to the other end of the rotatable shaft, and the first bevel gear is attached to a rotatable body. With this structure, the demolding device can be rendered slim. In other words, since a relatively large motor is mounted on a side of the demolding device, the rotatable shaft may transmit a rotating force from the demolding device in the lateral direction in order to rotate the rotatable body. Therefore, the demolding device does not interfere with other devices.

According to still another aspect of the invention, a rotatable body has an attachment surface arranged at a substantially center portion thereof, and includes a through-hole in the axial direction, through which an ejector pin of an ejector device is inserted. In this structure, the rotatable body does not interfere with the ejector device, and thus several types of molds may be attached to the demolding device.

According to still another aspect of the invention, a rotatable body comprises a rotatable main body and a rotatable piece. The rotatable piece is accommodated in a hole, which is formed with a predetermined depth on an upper surface of the rotatable main body. The rotatable piece is constrained in a rotational direction, but may slide in an axial direction. The rotatable piece is also urged upwards by a spring, which installed in the opening. Therefore, when a movable mold is attached to the demolding device, the rotatable piece may be simply engaged with a rotatable member, and the rotatable piece and a certain rotatable member on a movable mold are not required to be precisely adjusted to a rotational position.

According to still another aspect of the invention, a plurality of molded products may be formed at the same time by virtue of a structure in which a rotation of a rotatable mold element is transmitted to a plurality of the rotatable mold elements through an idle gear mechanism, i.e., a structure that an idle gear mechanism installed in a mold operates a plurality of rotatable mold elements.

### BRIEF DESCRIPTION OF THE DRAWINGS

Figs. 1A and 1B illustrate a demolding device according to one embodiment of the invention, in which Fig. 1A is a rear view of the demolding device, viewed from the attachment surface that is to be attached to a movable platen, and Fig. 1B is a cross-sectional view of a main portion of the demolding device; and
Fig. 2 is a side view of a demolding device according to one embodiment of the invention, and of a main portion of a mold attached to the demolding device.

### DETAILED DESCRIPTION OF THE PREFERRED EMBODIMENTS

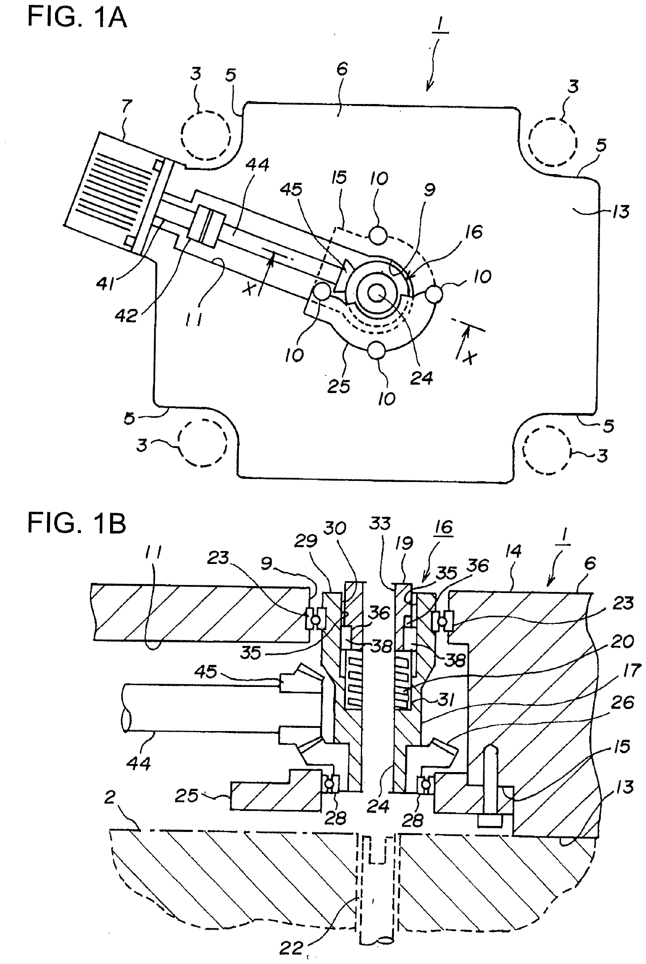

An exemplary embodiment of the invention will now be described. A demolding device 1 according to the embodiment is one device configuring an injection molding machine. More specifically, the demolding device 1 is installed in a movable platen of a platen device of the injection molding machine. In other words, the demolding device 1 forms a part of the movable platen. Fig. 1A is a bottom view of the demolding device 1, i.e., being viewed from an attachment surface relative to the movable platen 2, and illustrates four tie bars 3 as depicted by dotted lines, with the demolding device 1 attached onto the movable platen 2. Fig. 1B is a cross-sectional view of the demolding device 1, proximate to a center portion thereof, taken along a line X-X of Fig. 1A. In Fig. 1B, the movable platen 2, to which the demolding device 1 is attached, is illustrated as a dotted line.

The demolding device 1 generally includes a plate 6 having a substantially square upper surface, and a servo motor 7 installed in a lateral end surface of the plate 6. The plate 6 has a shape similar to the upper surface of the movable platen 2, and is installed so as to substantially overlap the movable platen 2 in its entirety. Therefore, a mold clamping force may be exerted to a mold without loss. The rectangular of the plate 6 are cut off proximately at four corners thereof, as depicted with the reference 5, so that the plate 6 does not interfere with the tie bars 3. A hollow 9 having a relatively large diameter is provided to a center portion of the plate 6. The hollow 9 passes from a surface that is to be attached to the movable platen 2, i.e., a back surface 13, through a surface to which the movable mold is attached, i.e., a front surface 14. The hollow 9 accommodates a rotatable body, as explained later. The plate 6 includes a plurality of through-holes 10 each having a small diameter, which pass through the front surface 14. The through-holes 10 allow an ejector rod protruding from the movable platen 2 to enter and pass though the holes 10. Fig. 1A illustrates only four through-holes 10. The back surface 13 of the plate 6 has a groove 11. The groove 11 provides a floor, which extends from the lateral end portion, to which the servo motor 7 is installed, to the hollow 9 of the center portion of the plate 6. The groove 11 accommodates a transmission mechanism for transmitting a rotation of the servo motor 7 to the rotatable body, and has a minimum width only sufficient to receive the transmission mechanism. Therefore, a mold clamping force exerted by the movable platen 2 may uniformly apply to the movable mold attached to the demolding device 1 under no influence by the groove 11. As illustrated in Fig. 1A, the groove 11 is formed obliquely at a predetermined angle relative to the upper and lower sides of the rectangular plate 6. The oblique structure of the groove 11 prevents the transmission mechanism accommodated in the groove from interfering with the ejector rod. The back surface 13 of the plate 6 includes a shallow hole 15 having a diameter larger than that of the hollow 9. The hole 15 is fitted with a cover 25, which is to press the rotatable body accommodated in the hollow 9.

The rotatable body 16 includes a rotatable main body 17, a rotatable piece 19, and a spring 20. The rotatable main body 17 is a rotatable member having a relatively large diameter and a height lower than a thickness of the plate 6. The rotatable main body 17 includes an ejector rod insertion hole 24 axially formed to have the ejector rod 22 is inserted therethrough. The rotatable main body 17 is installed vertically with respect to the front surface 14 of the plate 6, and is rotatable with respect to the plate 6 with ball bearings 23 placed between the frame 17 and the plate 6. A first bevel gear 26 is integrally secured on the bottom of the rotatable main body 17. While the rotatable main body 17 is installed to the hollow 9 by the cover 25, ball bearings 28 are also installed between the first bevel gear 26 and the cover 25. As the rotatable main body 17 is supported by the ball bearings 23 and 28, the axis may smoothly rotate without vibration.

An upper surface 29 of the rotatable main body 17 includes a first hole 30 formed coaxially with the ejector rod insertion hole 24, the first hole 30 having a diameter larger than that of the ejector rod insertion hole 24 and a predetermined depth. A second hole 31 having a predetermined depth and a diameter smaller than that of the first hole 30 is formed at the bottom of the first hole 30. The first hole 30 having a larger diameter is a rotatable piece accommodation hole 30 for accommodating the rotatable piece 19, and the second hole 31 having a smaller diameter is a spring accommodation hole 31 for accommodating the spring 20. The rotatable piece accommodation hole 30 has a plurality of key grooves 35 for transmitting a rotational force to the rotatable piece 19, as explained later.

The rotatable piece 19 is a rotatable member having a suitable dimension to be accommodated into the rotatable piece accommodation hole 30, and has an outer diameter a little smaller than the inner diameter of the rotatable piece accommodation hole 30. The rotatable piece 19 also has an ejector rod insertion hole 33 for allowing the ejector rod 22 to insert and penetrate therethrough. Although it is not depicted in Fig. 1, the rotatable piece 19 includes a protrusion on the upper surface of the rotatable piece 19, the protrusion being engaged with a certain rotatable member of a movable mold. The circumferential surface of the rotatable piece 19 also has key grooves 36 extending in an axial direction thereof.

The rotatable body 16 is assembled by inserting the spring 20 into the spring accommodation hole 31 of the rotatable main body 17, and then inserting the rotatable piece 19 into the rotatable piece accommodation hole 30 above the spring 20. Furthermore, sliding keys 38 are installed to fit both the key grooves 35 of the rotatable main body 17 and the key grooves 36 of the rotatable piece 19. Therefore, the rotatable piece 19 may not only receive a rotational force transmitted from the rotatable main body 17, but slide axially. The rotatable piece 19 is urged upward by the spring 20 against the rotatable main body 17. Accordingly, the head of the rotatable piece 19 protrudes a little over the front surface 14 of the plate 6. Since the rotatable piece 19 is urged upward by the spring 20, such urging force allows the head of the rotatable piece 19 to come into contact with the rotatable member that is installed in the movable mold when the movable mold is attached to the front surface 14 of the plate 6. Therefore, even if the head of the rotatable piece 19 does not engage with the protrusion of the rotatable member of the movable mold, the rotatable piece 19 may automatically engage with the rotatable member in a suitable engaging position once rotating a little. Furthermore, since the rotatable piece 19 may be pushed into the rotatable main body 17 against the urging of the spring 20, the rotatable piece 19 would not prohibit even a mold, which has been known to include no rotatable parts, from being easily attached to the front surface 14 of the plate 6.

The transmission mechanism for transmitting a rotational force of the servo motor 7 to the rotatable body 16 includes a rotatable shaft 44 connected to an output shaft 41 of the servo motor 7 with a coupling 42 interposed therebetween, a second bevel gear 45 secured on a distal end of the rotatable shaft 44, and a first bevel gear 26 engaged with the second bevel gear 45. As explained above, the first bevel gear 26 is installed to the rotatable main body 17. The rotatable shaft 44 is accommodated in the groove 11, and the first and second bevel gears 26 and 45 are positioned in the hollow 9, so that the rotatable shaft 44 and the first and second bevel gears 26 and 45 do not interfere with other components.

The demolding device 1 is installed to the movable platen 2 by means of certain bolts so that the back surface 13 of the demolding device 1 is attached firmly to the movable platen 2. A servo amplifier for supplying power to the servo motor 7 and a control circuit for controlling the servo amplifier are connected to a controller of the injection molding machine via a predetermined control line. Therefore, the demolding device 1 is adapted to operate in connection to a molding cycle. The bolts, the servo amplifier, and the control circuit are not depicted in Fig. 1.

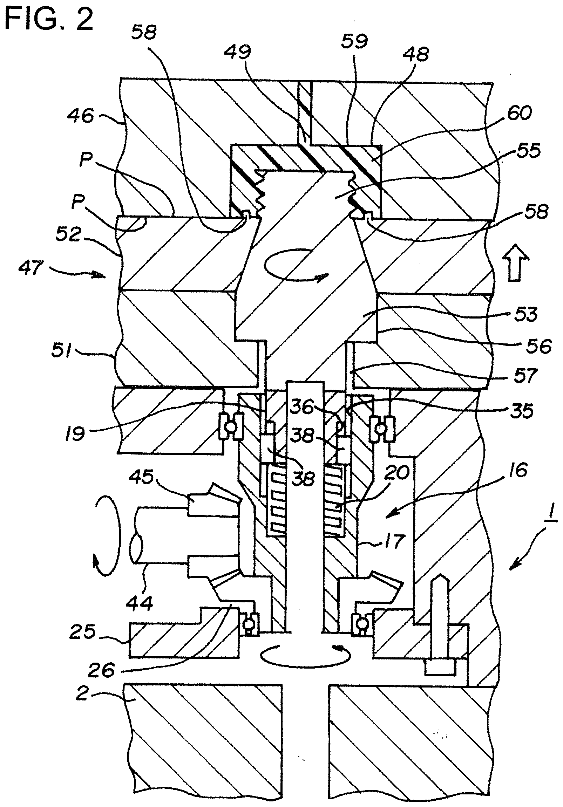

With reference to Fig. 2, a mold installed to an injection molding machine including the demolding device 1 according to one embodiment of the invention will be described. The mold according to this embodiment is a mold for forming a resin cap, the inner side of which has a female thread. The mold has a fixed mold 46 installd to a fixed platen (not shown) and a movable mold 47 installed to the front surface 14 of the plate 6. The fixed mold 46 has a recess 48 in a predetermined depth on a parting surface P. The bottom surface of the recess 48 is penetrated by a runner 49, which introduces molten resin from the back surface of the fixed mold 46. Although not illustrated in Fig. 2, a nozzle of the injection molding machine, which includes a heating cylinder and a screw, is inserted from an opening of the fixed platen, and contacts with a spool bush, which is installed back surface of the fixed mold 46, under a predetermined touch force.

The movable mold 47 according to this embodiment includes a base plate 51 installed to the demolding device 1, a holding plate 52 installed on the base plate 51, and a core mold 53. The core mold 53 has an axially symmetric shape so as to rotate in the mold, and includes a head portion 55 having a male thread for forming a female thread of a molded product. The core mold 53 expands in diameter from the head portion 55 to a body portion 56, and a axis portion 57 below the core mold 53 has the same diameter as that of the rotatable piece 19. The base plate 51 and the holding plate 52 respectively has a predetermined hole adapted to the shape of the core mold 53. The core mold 53 is mounted rotatably within the base plate 51 and the holding plate 52. The axis portion 57 has a predetermined protrusion on a bottom surface thereof, the protrusion being engaged with the protrusion of the head portion of the rotatable piece 19 of the demolding device 1. Incidentally, a concave portion may alternatively be formed on the bottom surface of the axis portion 57 so as to be engaged with the protrusion of the head portion of the rotatable piece 19 of the demolding device 1. Accordingly, the core mold 53 rotates as the rotatable piece 19 rotates. Furthermore, the holding plate 52 is urged upwards against the base plate 51 by a spring, which is not illustrated in Fig. 2. Therefore, once the mold is opened, the holding plate 52 is pushed up so that the head portion 55 of the core mold 53 is concealed inside below the parting surface P of the holding plate 52. In contrast, when the mold is clamped, the holding plate 52 is pressed onto the base plate 51 so that the core mold 53 projects the head portion 55 beyond the parting surface P, as illustrated in Fig. 2. In this event, the recess 48, the head portion 55 of the core mold 53, and the parting surface P of the holding plate 52 define a cavity 59 for forming a cap. The parting surface P of the holding plate 52, which defines the cavity, includes a plurality of small protrusions 58. When a molded product is demolded with the core mold 53 being in rotation, the protrusions 58 prohibit the rotation of the molded product.

A method for forming a cap will be explained in connection to an injection molding machine incorporating a mold according to the embodiment of the invention. The platen device operates to clamp the fixed mold 46 and the movable mold 47. As a result, the holding plate 52 is pressed onto the base plate 51, and the head portion 55 of the core mold 53 extends beyond the parting surface P of the holding plate 52. As explained above, the recess 48 of the fixed mold 46, the head portion 55 of the core mold 53, and the parting surface P of the holding plate 52 define the cavity 59 for forming a cap. As known in the art, a heating cylinder of the injection molding machine is heated up by a heater, and a screw rotates in the heating cylinder, so that resin material is introduced into the heating cylinder. Then, the resin material is melt down in the heating cylinder, and the molten resin is fed in a forward direction of the screw. The screw is operated to move in an axial (forward) direction. Accordingly, the molten resin is injected from the runner 49 to the cavity 59. Once the molten resin is cooled down and solidified, the mold is opened by operating the mold clamping device. In other words, the movable mold 47 is opened with respect to the fixed mold 46. Due to the thread formed on the head portion 55 of the core mold 53, the cap 60 of the molded product remains on the side of the movable mold 47 with the head portion 55 covered by the cap. The servo motor 7 of the demolding device 1 is operated, and then the rotatable body 16 rotates in a predetermined direction through the rotatable shaft 44, the second and the first bevel gears 45 and 26. As a result, the core mold 53 secured to the rotatable piece 19 is rotated. Since the cap 60 of the molded product is prohibited from rotating due to the presence of the protrusions 58 of the holding plate 52, the core mold 53 is only allowed to rotate so that the head portion 55 of the core mold 53 gradually becomes apart from the female thread of the molded product. Since the holding plate 52 is urged upwards against the base plate 51, the cap 60 is held upwards together with the holding plate 52. As the core mold 53 continues to rotate, the cap 60 is removed from the head portion 55 of the core mold 53. Then, the servo motor 7 of the demolding device 1 is turned off. Subsequent processes are the same as known in the art.

The demolding device according to the embodiment of the invention may have several modifications. For example, while the servo motor has been explained to be installed on a lateral side of the demolding device, the servo motor may be installed on the back side of the rotatable body so that the rotatable body is directly operated to rotate by the servo motor. Furthermore, while the transmission mechanism for transmitting a rotation of the servo motor to the rotatable body has been described to be configured by a rotatable shaft and bevel gears, the transmission mechanism may be designed to transmit the rotation by means of gears. Moreover, although the rotatable body has been illustrated to be installed at the center portion of the plate, the rotatable body may be mounted in a place slightly out of the center portion thereof. This structure eliminates a demand of the ejector rod insertion hole to be installed at the center of the rotatable body. It is also understood that a spline device may replace the key groove and the sliding key.

Further, the mold may have several modifications. While a mold having one core mold has been described above, a demolding device according to the embodiment may apply to a mold incorporating a plurality of core molds. This may be achieved by, for example, an idle gear device, which would operate a plurality of core molds to rotate at the same time. Furthermore, it is possible to attach a mold, which has been known to include no mold components such as a core mold, to the demolding device according to the embodiment. In order to remove a molded product from this mold, the ejector rod needs to protrude to operate an element such as an ejector pin installed in the mold. In this structure, by means of a connection of an extended rod to an ejector rod installed in the movable platen, the ejector rod may be inserted through an ejector rod insertion hole in a rotatable body.

## Claims

1. A demolding device (1) for demolding a molded product (60) formed by a mold, wherein the mold comprises a fixed mold (46) of a fixed platen, a movable mold (47) of a movable platen and a rotatable moid element (53) and is configured to form the molded product by using a cavity (59) defined by the fixed mold, the movable mold (47) and the rotatable mold element (53),
the demolding device (1) comprising:
a motor (7); and
a rotatable body (16) rotatable by the motor through a rotation transmission mechanism (44, 45, 26),
wherein the demolding device is installed on a side of the movable platen (2) of the mold, wherein the rotatable body (16) is accommodated in an opening (9) that is provided on an attachment surface (14) to which the movable mold is attachable, and
wherein the rotatable body (16) is adapted to transmit a rotation to the rotatable mold element (53), which is installed on a side of the movable mold, for rotating the rotatable mold element (53) so as to demold the molded product formed by the cavity (59),
**characterized in that**
the rotatable body (16) comprises a rotatable main body (17) and a rotatable piece (19),
wherein a hole (30, 31) is formed on an upper surface of the rotatable main body (17), said upper surface facing the fixed mold (46), wherein the rotatable piece (19) is accommodated in the hole (30, 31) such that the rotatable piece (19) is restricted in a rotational direction and is slidable in an axial direction, and
wherein the rotatable piece (19) is urged upwards towards the fixed mold (46) by a spring (20) installed in the hole (30, 31).

2. The demolding device (1) according to claim 1,
wherein the motor (7) is installed on a lateral side of the rotation transmission mechanism (44, 45, 26),
wherein the rotation transmission mechanism (44, 45, 26) comprises a rotatable shaft (44) and an engaging pair of a first bevel gear (26) and a second bevel gear (45), wherein one end of the rotatable shaft is connected to an output axis (41) of the motor (7),
wherein the second bevel gear (45) is installed to another end of the rotatable shaft (44), and
wherein the first bevel gear (26) is installed to the rotatable body (16).

3. The demolding device (1) according to claim 1,
wherein the rotatable body (16) is provided to substantially a center portion of the attachment surface (14), and
wherein the rotatable body (16) has a through-hole (24) in an axial direction, through which an ejector pin (22) of an ejector device is inserted.

4. The demolding device (1) according to claim 1,
wherein an upper end of the rotatable piece (19) of the rotatable body (16) is engaged with a lower portion of the rotatable mold element (53).

5. The demolding device (1) according to claim 1, further comprising:
a plurality of rotatable mold elements; and
an idle gear mechanism that transmits a rotation of the rotatable mold element to the plurality of rotatable mold elements.

6. An injection molding machine comprising the demolding device (1) according to any one of claims 1 to 5.

## Patentansprüche

1. Entformungsvorrichtung (1) zum Entformen eines durch eine Form gebildeten Formprodukts (60), wobei die Form eine feste Form (46) aus einer festen Platte, eine bewegliche Form (47) aus einer beweglichen Platte und ein drehbares Formelement (53) umfasst und konfiguriert ist, um das geformte Produkt durch Nutzung eines Hohlraums (59) zu bilden, der durch die feste Form, die bewegliche Form und das drehbare Formelement definiert wird, wobei die Entformungsvorrichtung (1) umfasst:
einen Motor (7) und
einen drehbaren Körper (16), der durch den Motor durch einen Rotationsgetriebemechanismus (44, 45, 26) drehbar ist,
wobei die Entformungsvorrichtung an einer Seite der beweglichen Platte (2) der Form installiert ist,
wobei der drehbare Körper (16) in einer Öffnung (9) aufgenommen wird, die an einer Befestigungsfläche (14) bereitgestellt wird, an der die bewegbare Form angebracht werden kann, und
wobei der drehbare Körper (16) angepasst ist, um eine Drehung auf das drehbare Formelement (53) zu übertragen, das an einer Seite der beweglichen Form installiert ist, um das drehbare Formelement so zu drehen, dass das durch den Hohlraum (59) geformte Produkt entformt wird,
**dadurch gekennzeichnet, dass**
der drehbare Körper (16) einen drehbaren Hauptkörper (17) und ein drehbares Teil (19) umfasst,
wobei ein Loch (30, 31) an einer oberen Fläche des drehbaren Hauptkörpers (17) ausgebildet ist,
wobei die obere Fläche der festen Form (46) zugewandt ist,
wobei das drehbare Teil (19) in dem Loch (30, 31) so aufgenommen wird, dass das drehbare Teil (19) in einer Drehrichtung eingeschränkt und in einer axialen Richtung verschiebbar ist, und
wobei das drehbare Teil (19) durch eine in dem Loch (30, 31) installierte Feder (20) zur festen Form (46) gedrückt wird.

2. Entformungsvorrichtung (1) nach Anspruch 1,
wobei der Motor (7) an einer Seitenfläche des Rotationsgetriebemechanismus (44, 45, 26) installiert ist,
wobei der Rotationsgetriebemechanismus (44, 45, 26) eine drehbare Welle (44) und ein ineinander greifendes Paar eines ersten Kegelrads (26) und eines zweiten Kegelrads (45) umfasst,
wobei ein Ende der drehbaren Welle mit einer Ausgangsachse (41) des Motors (7) verbunden ist,
wobei das zweite Kegelrad (45) an einem anderen Ende der drehbaren Welle (44) installiert ist und
wobei das erste Kegelrad (26) an dem drehbaren Körper installiert ist.

3. Entformungsvorrichtung (1) nach Anspruch 1,
wobei der drehbare Körper (16) für im Wesentlichen einen Mittelabschnitt der Befestigungsfläche (14) bereitgestellt wird und
wobei der drehbare Körper (16) ein Durchgangsloch (24) in einer axialen Richtung hat, durch das ein Auswurfstift (22) einer Auswurfvorrichtung eingesetzt wird.

4. Entformungsvorrichtung (1) nach Anspruch 1,
wobei ein oberes Ende des drehbaren Teils (19) des drehbaren Körpers (16) mit einem unteren Teil des drehbaren Formelements (53) in Eingriff steht.

5. Entformungsvorrichtung (1) nach Anspruch 1, die des Weiteren umfasst:
eine Vielzahl von drehbaren Formelementen und
einen Leerlaufmechanismus, der eine Drehung des drehbaren Formelements auf die Vielzahl von drehbaren Formelementen überträgt.

6. Spritzgießmaschine, die die Entformungsvorrichtung (1) nach einem der Ansprüche 1 bis 5 umfasst.

## Revendications

1. Dispositif de démoulage (1) pour démouler un produit moulé (60) formé par un moule, dans lequel le moule comprend un moule fixe (46) d'un plateau fixe, un moule mobile (47) d'un plateau mobile et un élément de moule rotatif (53) et est configuré pour former le produit moulé par utilisant une cavité (59) définie par le moule fixe, le moule mobile (47) et l'élément de moule rotatif (53),
le dispositif de démoulage (1) comprenant:
un moteur (7); et
un corps rotatif (16) rotatif par le moteur par le biais d'un mécanisme de transmission de rotation (44, 45, 26),
dans lequel le dispositif de démoulage est installé sur un côté du plateau mobile (2) du moule, dans lequel le corps rotatif (16) est logé dans une ouverture (9) prévue sur une surface de fixation (14) à laquelle le moule mobile peut être fixé, et dans lequel le corps rotatif (16) est prévu pour transmettre une rotation à l'élément de moule rotatif (53), qui est installé sur un côté du moule mobile, pour faire tourner l'élément de moule rotatif (53) de manière à démouler le produit moulé formé par la cavité (59),
**caractérisé en ce que**
le corps rotatif (16) comprend un corps principal rotatif (17) et une pièce rotative (19), un trou (30, 31) étant formé sur une surface supérieure du corps principal rotatif (17), ladite surface supérieure faisant face au moule fixe (46),
dans lequel la pièce rotative (19) est logée dans le trou (30, 31) de sorte que la pièce rotative (19) est limitée dans une direction de rotation et peut coulisser dans une direction axiale, et
dans lequel la pièce rotative (19) est poussée vers le haut vers le moule fixe (46) par un ressort (20) installé dans le trou (30, 31).

2. Dispositif de démoulage (1) selon la revendication 1,
dans lequel le moteur (7) est installé sur un côté latéral du mécanisme de transmission de rotation (44, 45, 26),
dans lequel le mécanisme de transmission de rotation (44, 45, 26) comprend un arbre rotatif (44) et une paire d'engrènement d'un premier engrenage conique (26) et d'un second engrenage conique (45),
dans lequel une extrémité de l'arbre rotatif est connectée à un axe de sortie (41) du moteur (7), dans lequel le second engrenage conique (45) est installé à une autre extrémité de l'arbre rotatif (44),
et
dans lequel le premier engrenage conique (26) est installé sur le corps rotatif (16).

3. Dispositif de démoulage (1) selon la revendication 1,
dans lequel le corps rotatif (16) est prévu pour centrer plus ou moins une partie de la surface de fixation (14), et
dans lequel le corps rotatif (16) possède un trou traversant (24) dans une direction axiale, à travers lequel est introduite une broche d'éjecteur (22) d'un dispositif éjecteur.

4. Dispositif de démoulage (1) selon la revendication 1,
dans lequel une extrémité supérieure de la pièce rotative (19) du corps rotatif (16) est en prise avec une partie inférieure de l'élément de moule rotatif (53).

5. Dispositif de démoulage (1) selon la revendication 1, comprenant en outre:
une pluralité d'éléments de moule rotatifs; et
un mécanisme d'engrenage de ralenti qui transmet une rotation de l'élément de moule rotatif à la pluralité des éléments de moule rotatifs.

6. Machine à mouler par injection comprenant le dispositif de démoulage (1) selon l'une quelconque des revendications des revendications 1 à 5.
